# EUROPEAN PATENT APPLICATION

(11) **EP 4 714 794 A1**
(43) Date of publication of application: **25.03.2026**
(21) Application number: 25194253.8
(22) Date of filing: 06.08.2025
(51) Int. Cl.: B62D 21/15, B60K 1/04, B62D 25/02, B62D 25/20

(54) **SIDE STRUCTURE FOR ELECTRIC VEHICLE**

(30) Priority: 18.09.2024 JP 2024161188
(71) Applicant: Suzuki Motor Corporation, Shizuoka 432-8611 (JP)
(72) Inventor: ARAI, Hayato, Hamamatsu-shi, 432-8611 (JP); SASAKI, Makoto, Hamamatsu-shi, 432-8611 (JP)
(74) Representative: Plasseraud IP

(57) **Abstract**

[Problem to be Solved] To protect a battery pack installed on the lower side of a floor from an impact load.

[Solution] A side structure for an electric vehicle includes a vehicle body frame 20, 30 disposed outside a battery pack 10 and extending in the front-rear direction, a side sill 40 that is disposed outside the vehicle body frame 20, 30 while being spaced apart from the vehicle body frame 20, 30 and extends in the front-rear direction, and a reinforcement 60 connecting a lower portion of the side sill 40 and the vehicle body frame 20, 30. The widthwise rigidity of the reinforcement 60 is set to be lower than the widthwise rigidity of the vehicle body frame 20, 30.

## Description

### [Technical Field]

The present invention relates to side structures for electric vehicles.

### [Background Art]

For example, as disclosed in Patent Literature 1, an electric vehicle includes a battery pack disposed on the lower side of a floor panel forming a floor portion of a vehicle. In this example, an electric motor for driving is disposed on the vehicle front side of the battery pack.

In order to extend the cruising range of the electric vehicle, an increase in the capacity of the battery pack is desired. As a result, battery packs are becoming larger. Since the battery pack is increased in size, the battery pack takes up a larger proportion of the space on the lower side of the floor portion.

In the electric vehicle, a space needs to be ensured on the lower side of the floor panel to dispose the battery pack. In the structure of the above example, a floor panel is disposed on the upper side of side members disposed on both sides in the vehicle width direction. The battery pack is disposed between both side members on the lower side of the floor panel.

The side members of the above example are members that ensure rigidity of the vehicle body, and need to be sufficiently strong to resist an impact load acting on the vehicle body due to a side collision, a frontal collision, and the like, for example. In order to set the vehicle widthwise dimension of the battery pack as large as possible, an outer side portion of the battery pack in the vehicle width direction and an inner side portion of the side member in the vehicle width direction are disposed closer to each other.

### [Citation List]

### [Patent Literature]

[Patent Literature 1] JP 2021-104759 A

### [Summary of Invention]

### [Problem to be Solved by the Invention]

A certain strength against an impact load of a side collision or the like needs to be ensured for a side portion of a lower portion of the vehicle body, and a structure for absorbing the impact of a side collision or the like is provided in the side portion. For example, a structure for absorbing impact absorbs an impact load by deforming a side portion of the vehicle body. Therefore, a stroke for deformation needs to be provided in the side portion of the vehicle body.

However, when a structure for absorbing impact is to be provided on the outer side in the vehicle width direction of a highly rigid side member, since the space on the outer side in the vehicle width direction of the side member is narrow in the structure of the above example, it may be difficult to ensure a sufficient stroke for the vehicle body side portion to deform to absorb impact. For this reason, in the structure of the above example, there has been room for improvement in effectively absorbing an impact load due to a side collision or the like in a space on the outer side in the vehicle width direction of a battery pack in a side portion of a lower portion of the vehicle body.

The present invention has been made to solve the above problem, and an object of the invention is to provide a side structure for an electric vehicle in which a battery pack can be installed in a limited space on the lower side of a vehicle floor portion to protect the battery pack from an impact load.

### [Means for Solving the Problem]

A side structure for an electric vehicle according to the present invention for achieving the above object includes: a battery pack disposed on the lower side of a floor portion of a vehicle; a vehicle body frame disposed on the outside in a vehicle width direction of the battery pack and extending in a front-rear direction of the vehicle on the lower side of the floor portion; and a side sill that is disposed on the outside in the vehicle width direction of the vehicle body frame while being spaced apart from the vehicle body frame and extends in the front-rear direction of the vehicle. The side structure for an electric vehicle includes a reinforcement connecting a lower portion of the side sill and the vehicle body frame, and a vehicle widthwise rigidity of the reinforcement is set to be lower than a vehicle widthwise rigidity of the vehicle body frame.

### [Advantageous Effect of Invention]

According to the present invention, a battery pack can be installed in a limited space on the lower side of a vehicle floor portion to protect the battery pack from an impact load.

### [Brief Description of Drawings]

[Figure 1] Figure 1 is a perspective view of a side structure for an electric vehicle according to the present invention as viewed from the upper side of a floor portion of an electric vehicle.
[Figure 2] Figure 2 is a perspective view of a left side portion in a state in which a side body outer panel is attached to the electric vehicle of Figure 1 as viewed from the lower side of the vehicle.
[Figure 3] Figure 3 is a bottom view of the side structure for an electric vehicle of Figure 1 as viewed from the lower side of the vehicle.
[Figure 4] Figure 4 is an enlarged perspective view of a battery mounting member, a battery suspension bracket, and other parts of Figure 3 as viewed from the lower side of the vehicle.
[Figure 5] Figure 5 is an enlarged bottom view illustrating a state in which a battery pack of Figure 3 is removed.
[Figure 6] Figure 6 is a perspective view of a cross-section along A-A of Figure 3 as viewed from the vehicle rear.
[Figure 7] Figure 7 is an end view on arrow along B-B of Figure 5, in which the battery pack and the battery suspension bracket are added.
[Figure 8] Figure 8 is a cross-sectional view on arrow along B-B of Figure 5, in which the battery suspension bracket is added.

### [Mode for Carrying Out the Invention]

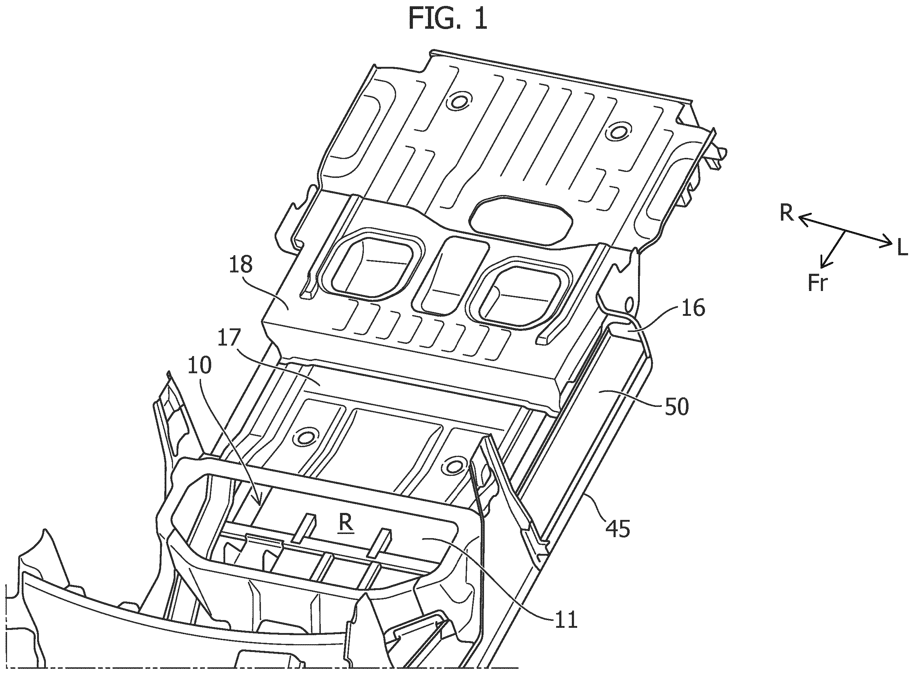

Hereinafter, an embodiment of a side structure for an electric vehicle according to the present invention will be described with reference to the drawings (Figures 1 to 8). Note that in the drawings, an arrow Fr direction indicates the forward direction in the front-rear direction of the vehicle. In the description of the embodiment, "front portion (front end) and rear portion (rear end)" correspond to a front portion and a rear portion in the front-rear direction of the vehicle. Additionally, an arrow R and an arrow L indicate the right side and the left side when an occupant faces the vehicle front. Furthermore, an arrow U indicates the upper side in the up-down direction of the vehicle.

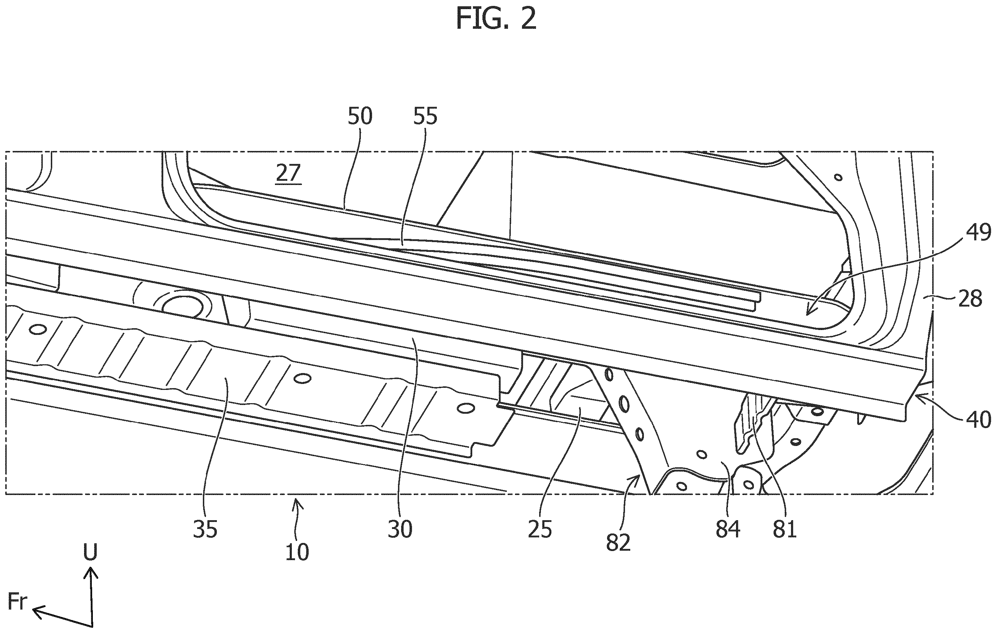

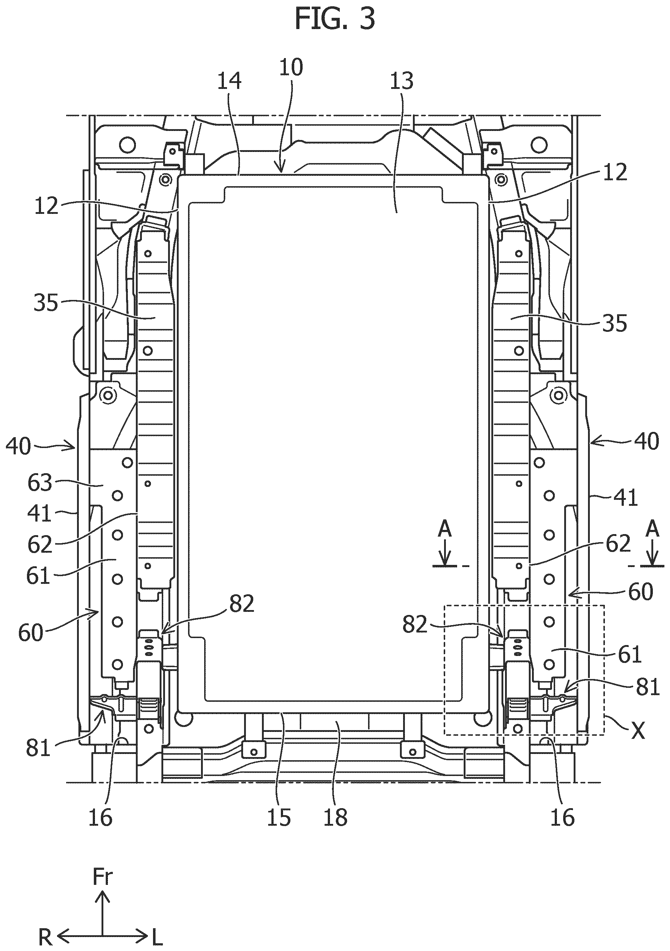

As illustrated in Figures 2 to 4, the side structure for an electric vehicle of the present embodiment includes a battery pack 10 disposed on the lower side of a floor portion. Moreover, as illustrated in Figure 3, the side structure includes a vehicle body frame, a side sill 40, a reinforcement 60, and a cross member. In the present embodiment, the reinforcement 60 connects a lower portion of the side sill 40 and the vehicle body frame forming the framework of the vehicle body. The vehicle widthwise rigidity of the reinforcement 60 is set lower than the vehicle widthwise rigidity of the vehicle body frame. Hereinafter, members forming the side structure of the present embodiment will be described.

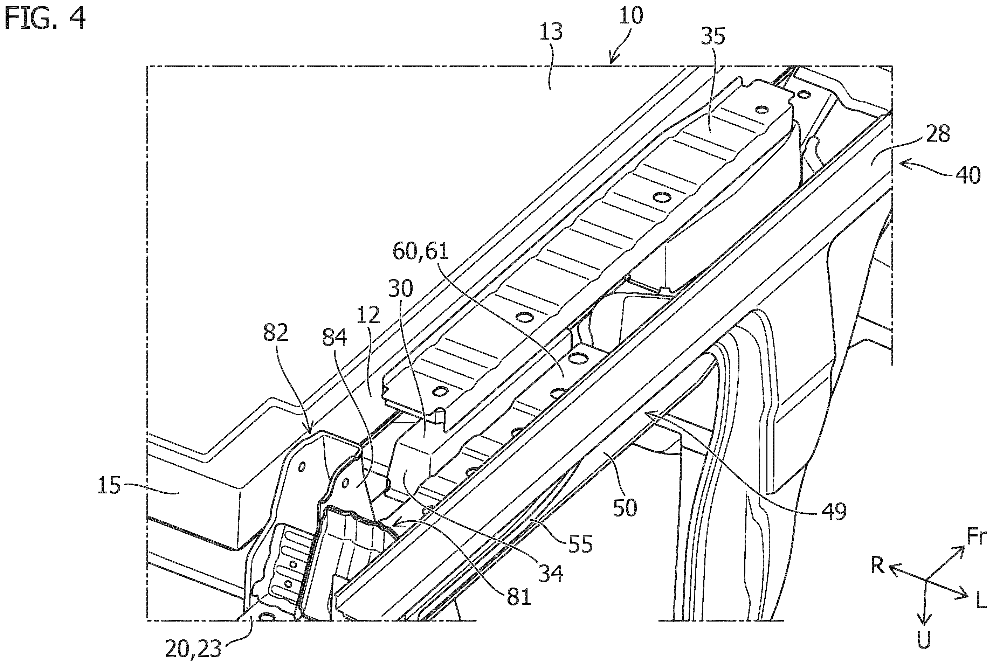

As illustrated in Figures 1 and 3, the battery pack 10 is a so-called heavy object disposed on the lower side of a floor panel 17 forming the floor portion of the vehicle. Although descriptions of the detailed structure of the battery pack 10 are omitted, the external shape of the battery pack 10 is a substantially rectangular parallelepiped shape, and includes an upper surface portion 11, left and right side wall portions 12, a lower surface portion 13, a front wall portion 14, and a rear wall portion 15 (Figures 3 and 4). The battery pack 10 is suspended from a member forming the vehicle body such as a side member 20 via a battery mounting member 30 and a battery suspension bracket 35, for example. The battery pack 10 attachment structure will be described later.

The vehicle body frame of the present embodiment is a member disposed on the outside in the vehicle width direction of the battery pack 10 and extending in the front-rear direction of the vehicle on the lower side of the floor portion. The vehicle body frame is a highly rigid member formed of a metal material. The vehicle body frame of the present embodiment includes the side member 20 and the battery mounting member 30.

The side member 20 is a highly rigid member forming the framework of the vehicle body, and is formed of a metal material. As illustrated in Figure 3, the side members 20 are disposed in a pair on both sides in the vehicle width direction in a lower portion of the vehicle, and extend in the front-rear direction of the vehicle. In this example, the side members 20 are disposed along and on the outer side in the vehicle width direction of the left and right side wall portions 12 of the battery pack 10 while being spaced apart from them.

In the front-rear direction of the vehicle, a front portion of the side member 20 is disposed on the vehicle front side of the front wall portion 14 of the battery pack 10, and a rear portion of the side member 20 is disposed on the vehicle rear side of the rear wall portion 15 of the battery pack 10.

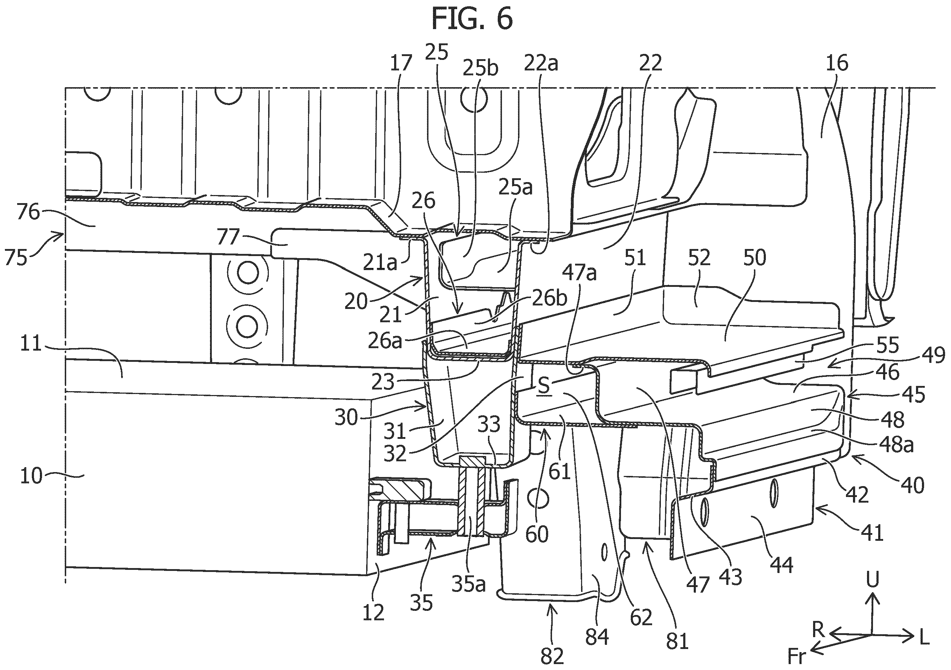

As illustrated in Figures 6 to 8, the side member 20 has a U-shaped cross-sectional shape open to the upper side of the vehicle. That is, the side member 20 includes an inner wall portion 21, an outer wall portion 22, and a bottom surface portion 23, and the bottom surface portion 23 includes a substantially rectangular horizontal surface extending in the front-rear direction of the vehicle. The inner wall portion 21 protrudes upward from the vehicle widthwise inner end of the bottom surface portion 23, and extends in the front-rear direction of the vehicle. An inner flange portion 21a protruding inward in the vehicle width direction is provided at the upper end of the inner wall portion 21. The outer wall portion 22 protrudes upward from the vehicle widthwise outer end of the bottom surface portion 23, and extends in the front-rear direction of the vehicle. An outer flange portion 22a protruding outward in the vehicle width direction is provided at the upper end of the outer wall portion 22. The inner flange portion 21a and the outer flange portion 22a are joined to a lower surface of the floor panel 17 by spotwelding.

In the present embodiment, as illustrated in Figure 6, an upper reinforcement plate 25 and a lower reinforcement plate 26 are provided inside the side member 20. The upper reinforcement plate 25 includes a flat surface portion 25a extending in the front-rear direction of the vehicle and flange portions 25b protruding upward from both ends in the vehicle width direction of the flat surface portion 25a. The flange portions 25b on both sides are joined to the inner wall portion 21 and the outer wall portion 22 of the side member 20. Note that the flat surface portion 25a of the upper reinforcement plate 25 is disposed on the lower side of the floor panel 17 while being spaced apart from the floor panel 17. As illustrated in Figures 6 to 8, similar to the upper reinforcement plate 25, the lower reinforcement plate 26 includes a flat surface portion 26a and a flange portion 26b. The flat surface portion 26a of the lower reinforcement plate 26 is joined to the bottom surface portion 23 of the side member 20. Additionally, the flange portion 26b of the lower reinforcement plate 26 is joined to the inner wall portion 21 and the outer wall portion 22 of the side member 20.

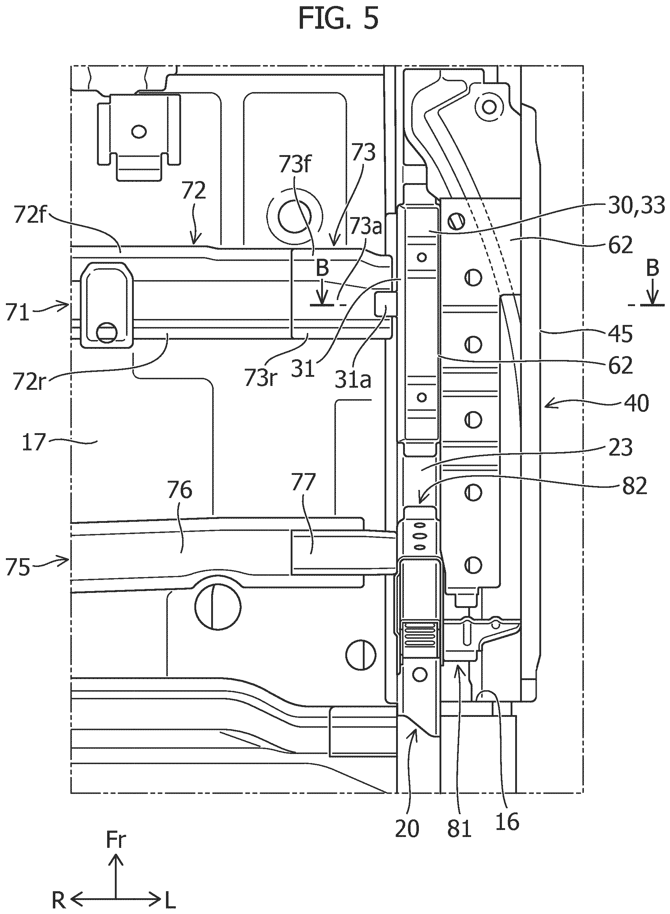

Next, the cross member will be described. As illustrated in Figure 5, cross members 71, 75 are highly rigid members forming the framework of the vehicle body, and are formed of a metal material. The cross members 71, 75 of the present embodiment include the first cross member 71 and the second cross member 75 disposed on the vehicle rear side of the first cross member 71. Note that the cross members 71, 75 are not limited to the first cross member 71 and the second cross member 75.

As illustrated in Figure 5, the first cross member 71 includes a first central member 72 and a first extension member 73. The first central member 72 is a member extending in the vehicle width direction, and has a U-shaped cross section open to the upper side. In addition, a front flange portion 72f and a rear flange portion 72r are provided at the upper end of a front portion and the upper end of a rear portion of the first central member 72, respectively. The front flange portion 72f and the rear flange portion 72r are joined to the lower surface of the floor panel 17 by spotwelding.

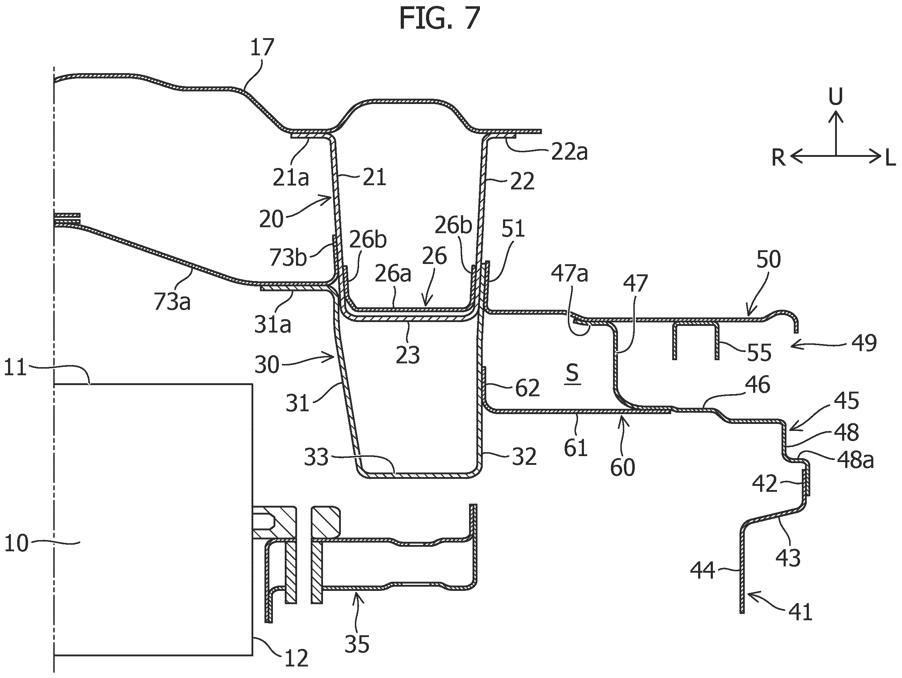

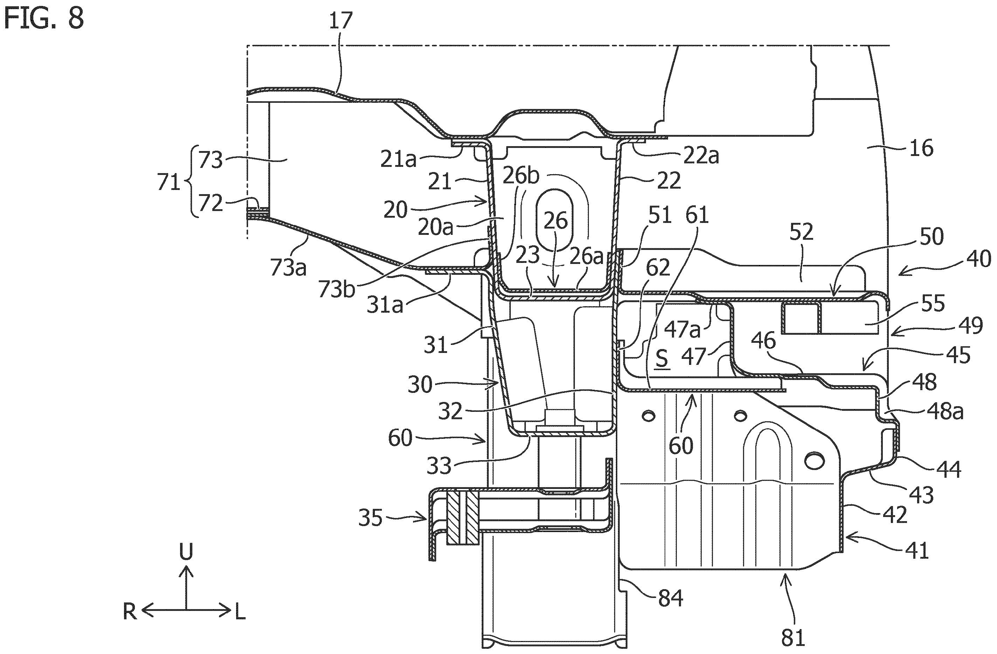

The first extension member 73 is a member extending outward in the vehicle width direction from an outer side portion in the vehicle width direction of the first central member 72. The outer side portion of the first central member 72 and an inner side portion of the first extension member 73 are preferably joined by spotwelding, for example. Moreover, as illustrated in Figures 7 and 8, a lower surface portion 73a of the first extension member 73 is inclined toward the lower side of the vehicle from a vehicle widthwise middle portion toward the outside in the vehicle width direction. Additionally, a vertical flange portion 73b protruding toward the upper side of the vehicle is provided at the vehicle widthwise outer end of the lower surface portion 73a. The vertical flange portion 73b is joined to the inner wall portion 21 of the side member 20 by spotwelding. Additionally, as illustrated in Figure 5, a flange 31a provided in the battery mounting member 30, described later, is joined to an outer side portion in the vehicle width direction of the lower surface portion 73a by spotwelding.

Although not illustrated, a flange portion protruding frontward is provided in a vehicle widthwise end portion of a front wall of the first extension member 73, and a flange portion protruding rearward is provided in a vehicle widthwise end portion of a rear wall of the first extension member 73. Similar to the vertical flange portion 73b, these flange portions are joined to the inner wall portion 21 of the side member 20 by spotwelding.

As illustrated in Figure 5, similar to the first central member 72, the first extension member 73 has a U-shaped cross section open to the upper side, and a front flange portion 73f and a rear flange portion 73r are provided at the upper end of a front portion and the upper end of a rear portion. The front flange portion 73f and the rear flange portion 73r are joined to the inner flange portion 21a of the side member 20 by spotwelding.

As illustrated in Figure 5, similar to the first cross member, the second cross member 75 includes a second central member 76 and a second extension member 77. Similar to the first central member 72, the second central member 76 extends in the vehicle width direction and is joined to the lower surface of the floor panel 17. The second extension member 77 is a member extending outward in the vehicle width direction from an outer side portion in the vehicle width direction of the second central member 76, and an outer side portion of the second central member 76 and an inner side portion of the second extension member 77 are preferably joined by spotwelding, for example.

An outer side portion in the vehicle width direction of the second extension member 77 is joined to a hanger member 82 and the like. The hanger member 82 is a member provided in the side member 20. A trailing arm (not illustrated) is coupled to the hanger member 82. In this example, as illustrated in Figures 6 and 8, the hanger member 82 is a member extending toward the lower side of the vehicle from a lower surface of the side member 20, and is a highly rigid member formed of a metal material. Load is input to the hanger member 82 via the trailing arm. Therefore, the hanger member 82 has enough rigidity to withstand the load.

Next, the battery mounting member 30 that forms a part of the vehicle body frame will be described. In the present embodiment, two battery mounting members 30 are disposed while being spaced apart from each other in the front-rear direction of the vehicle along the bottom surface portion 23 of the side member 20. Each battery mounting member 30 is formed of a metal material and has high rigidity. Each battery mounting member 30 is a member extending in the front-rear direction of the vehicle and is joined to a lower portion of the side member 20. As illustrated in Figures 6 to 8, the battery mounting member 30 includes an inner wall portion 31, an outer wall portion 32, and a bottom surface portion 33, and has a U-shaped cross section as does the side member 20.

An upper portion of the inner wall portion 31 of the battery mounting member 30 is joined to the inner wall portion 21 of the side member 20 by spotwelding. Similarly, an upper portion of the outer wall portion 32 of the battery mounting member 30 is joined to the outer wall portion 22 of the side member 20 by spotwelding. As a result, the battery mounting member 30 and the bottom surface portion 23 of the side member 20 form a closed sectional structure in the cross section. With this configuration, rigidity increases, and the battery pack 10 can be suspended stably. In addition, the side member 20 and the battery mounting member 30 can form a highly rigid vehicle body frame.

As illustrated in Figure 5, a middle portion in the front-rear direction of the vehicle of the inner wall portion 31 of the battery mounting member 30 is provided with the flange 31a joined to the first cross member 71. The flange 31a is joined to a lower surface of the first cross member 26 by spotwelding. Since the first cross member is joined to the battery mounting member 30 and is joined to the side member 20 as described above, a highly rigid vehicle body frame can be formed.

As illustrated in Figures 4 and 8, a closing portion 34 is provided at the front end and rear end of the battery mounting member 30. The closing portion 34 has a plate shape joined to the inner wall portion 31, the outer wall portion 32, and the bottom surface portion 33 of the battery mounting member 30. Moreover, a flange is provided at the upper end of the closing portion 34, and the flange is joined to the bottom surface portion 23 of the side member 20. As a result, a closed space is formed inside the battery mounting member 30, and a closed sectional structure is formed in the plane cross section of the battery mounting member 30. Thus, the battery mounting member 30 can ensure high rigidity.

Here, a configuration in which the battery pack 10 is suspended from the vehicle body will be described. The battery pack 10 is suspended from the vehicle body such as the side member 20 via the battery mounting member 30 and the battery suspension bracket 35.

As illustrated in Figures 6 to 8, the battery suspension bracket 35 is suspended from the bottom surface portion 33 of the battery mounting member 30 via a shaft member, and is disposed below the bottom surface portion 33 of the battery mounting member 30. As illustrated in Figures 2 to 4, the battery suspension bracket 35 has a predetermined widthwise length and extends in the front-rear direction of the vehicle. As illustrated in Figures 7 and 8, a vehicle widthwise inner end portion of the battery suspension bracket 35 is connected to a side surface portion of the battery pack 10.

Next, the side sill 40 of the present embodiment will be described. The side sill 40 is disposed in a lower portion of a door opening 27 provided in a vehicle side portion, and extends in the front-rear direction of the vehicle to form the framework of the vehicle body as does the side member 20. Additionally, a front portion of the side sill 40 preferably bulges toward the inside of the vehicle to be joined to an inner side portion in the vehicle width direction of the side member 20. As illustrated in Figures 6 to 8, the side sill 40 includes a lower inner panel 41, an upper inner panel 45, and an upper outer panel 50. The side sill 40 further includes an outer portion disposed in an outermost part of the vehicle. As illustrated in Figures 2 and 4, in the present embodiment, the outer portion of the side sill 40 is formed of a part of a side body outer panel 28 forming the outermost part of the vehicle. The outer portion of the side sill 40 is preferably disposed so as to cover the lower inner panel 41 and the upper inner panel 45 from the outside in the vehicle width direction.

As illustrated in Figures 1 and 6, the upper outer panel 50 (upper plate portion) extends horizontally in the front-rear direction of the vehicle, and an upper surface of the upper outer panel 50 functions as a footrest for occupants getting in and out of the vehicle through the door opening 27. In the present embodiment, the battery pack 10 is mounted on the lower side of the floor portion and the floor portion is set to be slightly high. Hence, the upper outer panel 50 is effective as a footrest. Although omitted from the drawing, a bead may be provided on the upper surface of the upper outer panel 50 to reduce slipping, for example. In this case, the bead may be formed so as to extend in the vehicle width direction, or it may be formed so as to extend slightly inclined with respect to the vehicle width direction. A door rail 55 along which a slide door (not illustrated) slides is joined to the lower surface of the upper outer panel 50.

An upper flange portion 51 protruding upward is provided on the inside in the vehicle width direction of the upper surface of the upper outer panel 50. The upper flange portion 51 is joined to the outer wall portion 22 of the side member 20 by spotwelding. Additionally, a rear flange portion 52 protruding upward is provided at the rear end of the upper surface of the upper outer panel 50. For example, as illustrated in Figures 6 and 8, the rear flange portion 52 is joined to a side panel 16 disposed outside an upper floor panel 18 by spotwelding, for example. In this example, a cushion portion of a rear seat (not illustrated) is installed in the upper floor panel 18.

As illustrated in Figures 6 to 8, the upper inner panel 45 is a panel that covers the door rail 55 from the inside in the vehicle width direction and the lower side of the vehicle. The upper inner panel 45 includes a bottom surface portion 46 (lower plate portion), an inner wall portion 47 (inner wall portion), an upper flange portion 47a, and an outer wall portion 48. The bottom surface portion 46 is disposed while being spaced apart from a lower surface of the upper outer panel 50 to the lower side. The bottom surface portion 46 is substantially horizontal and extends in the front-rear direction of the vehicle. The bottom surface portion 46 is disposed while being spaced apart from the lower side of the door rail 55, and covers the door rail 55 from the lower side.

The inner wall portion 47 extends upward from the inside in the vehicle width direction of the bottom surface portion 46 to the lower surface of the upper outer panel 50. The inner wall portion 47 is disposed on the inside in the vehicle width direction of the door rail 55 while being spaced apart from the door rail 55, and is disposed so as to cover the door rail 55 from the inside in the vehicle width direction. The upper flange portion 47a is a portion protruding inward in the vehicle width direction from the upper end of the inner wall portion 47, and is joined to the lower surface of the upper outer panel 50 by spotwelding. For example, a lower arm provided in a lower portion of the slide door is disposed in a space formed by the upper outer panel 50, the inner wall portion 47 of the upper inner panel 45, and the bottom surface portion 46 and slides on the door rail 55.

The outer wall portion 48 of the upper inner panel 45 is a wall portion extending downward from the vehicle widthwise outer end of the bottom surface portion 46. As illustrated in Figure 6, a stepped portion 48a is provided in a middle portion in the up-down direction of the vehicle of the outer wall portion 48. The lower side of the stepped portion 48a is disposed on the outside in the vehicle width direction of the upper side of the stepped portion 48a. By providing the stepped portion 48a, rigidity in the front-rear direction of the vehicle can be improved. The outer wall portion 48 located on the lower side of the stepped portion 48a is joined to the lower inner panel 41 by spotwelding, for example.

Next, the lower inner panel 41 will be described. As illustrated in Figures 6 to 8, the lower inner panel 41 is a panel disposed on the lower side of the upper inner panel 45. The lower inner panel 41 includes an outer wall portion 42, an inclined surface portion 43, and an inner wall portion 44. The outer wall portion 42 is a side wall facing the outside in the vehicle width direction and extends in the front-rear direction of the vehicle. An upper portion of the outer wall portion 42 of the lower inner panel 41 is joined to the inside of a lower portion of the outer wall portion 48 of the upper inner panel 45 by spotwelding.

As illustrated in Figures 6 to 8, the inclined surface portion 43 of the lower inner panel 41 is a portion extending while being inclined toward the lower side of the vehicle from the lower end of the outer wall portion 42 toward the inside in the vehicle width direction. Additionally, the inner wall portion 44 is a side wall extending toward the lower side of the vehicle from the vehicle widthwise inner end of the inclined wall portion. In the vehicle width direction, the inner wall portion 44 of the lower inner panel 41 is disposed below the door rail 55.

Next, the reinforcement 60 will be described. As described above, the reinforcement 60 is a member configured to connect the lower portion of the side sill and the vehicle body frame, and it is formed of a metal material. The reinforcement 60 of the present embodiment includes a flat surface portion 61 extending in the vehicle width direction, and a vertical wall portion 62 protruding upward from the vehicle widthwise inner end of the flat surface portion 61 and extending in the front-rear direction of the vehicle. Moreover, a protrusion 63 protruding outward in the vehicle width direction is provided in a front portion of an outer side portion in the vehicle width direction of the flat surface portion 61.

An upper surface of the outer side portion in the vehicle width direction of the flat surface portion 61 of the reinforcement 60 is joined to a lower surface of the bottom surface portion 46 of the upper inner panel 45 of the side sill 40 by spotwelding. The vertical wall portion 62 of the reinforcement 60 is joined to the outer wall portion 32 of the battery mounting member 30 forming a part of the vehicle body frame by spotwelding. In the present embodiment, the vehicle widthwise rigidity of the reinforcement 60 is set lower than the vehicle widthwise rigidity of the vehicle body frame (battery mounting member 30 and side member 20).

In the side structure of the present embodiment, the battery pack 10 is disposed on the vehicle inner side of the vehicle body frame. For example, when an impact load of a side collision or the like is received, impact of the colliding object into the battery pack 10 needs to be reduced. In the present embodiment, the battery mounting member 30 and the side member 20 forming the highly rigid vehicle body frame are disposed on the outside in the vehicle width direction of the battery pack 10. Therefore, the impact load can be received by the highly rigid members.

For example, an impact load generated by a side collision or the like is first input to the side sill 40. When the side sill 40 is deformed inward in the vehicle width direction by an impact load input to the side sill 40, the load is input to the reinforcement 60. Note that a part of the impact energy of the impact load is converted into deformation energy by the deformation of the side sill 40

When the impact load is input to the reinforcement 60, the reinforcement 60 deforms so as to be crushed in the vehicle width direction while resisting the impact load. The impact energy input to the reinforcement 60 is converted into deformation energy by the crushing deformation of the reinforcement 60. As a result, a part of the impact load is absorbed by the reinforcement 60.

Since the side sill 40 and the reinforcement 60 absorb the impact load, the impact energy of the impact load input to the battery mounting member 30 is reduced. Here, since the battery mounting member 30 has higher rigidity than the reinforcement 60, it can receive the impact load with reduced impact energy.

Note that as illustrated in Figures 6 to 8, the battery mounting member 30 is joined to the side member 20, and therefore can receive the impact load by the side member 20 and the battery mounting member 30. Since the side member 20 is longer in the front-rear direction of the vehicle than the battery mounting member 30, load input to the battery mounting member 30 is transmitted to the side member 20, and can be effectively transmitted to front and rear portions of the vehicle, so that the load can be distributed effectively. Therefore, according to the above configuration of the present embodiment, impact load transmitted to the rear portion of the battery pack 10 can be reduced, and the battery pack 10 can be protected from the impact load.

Additionally, according to the present embodiment, by providing the reinforcement 60, it is possible to effectively absorb impact load between the side sill 40 and the side member 20. Therefore, the side member 20 can be disposed on the outside in the vehicle width direction, whereby a larger battery pack 10 can be disposed in the limited space on the lower side of the floor portion.

In the present embodiment, as illustrated in Figures 6 to 8, a gap S is formed between the battery mounting member 30 and the side sill 40 in the vehicle width direction, and the reinforcement 60 is disposed so as to cover the gap S from the lower side. Specifically, the gap S is formed between the inner wall portion 47 of the upper inner panel 45 of the side sill 40 and the outer wall portion 32 of the battery mounting member 30. The flat surface portion 61 of the reinforcement 60 is disposed so as to cover the gap S from the lower side.

For example, the gap S functions as a stroke for impact absorption when an impact load of a side collision or the like is received. For example, when an impact load of a side collision or the like is received and the side sill 40 deforms toward the vehicle inner side, the member forming the side sill 40 enters the region of the gap S. If the reinforcement 60 is not disposed, since there are fewer members that deform to absorb impact in the region of the gap S, the effect of impact absorption may be low. In contrast, in the present embodiment, the flat surface portion 61 of the reinforcement 60 deforms so as to be crushed when an impact load acts thereon. As a result, the impact energy deforms the reinforcement 60 and the impact energy can be absorbed.

Additionally, by providing the reinforcement 60, the crushing direction of the side sill 40 can be controlled easily, whereby impact load can be absorbed in an intended direction in the region of the gap S.

Moreover, in the present embodiment, as described above, the side sill 40 includes the upper outer panel 50 (upper plate portion) extending in the front-rear direction of the vehicle, the bottom surface portion 46 (lower plate portion) of the upper inner panel 45 disposed on the lower side of the upper outer panel 50 while being spaced apart from the upper outer panel 50, and the inner wall portion 47 extending upward from the vehicle widthwise inner end of the bottom surface portion 46 and joined to the lower surface of the upper outer panel 50. Additionally, as illustrated in Figure 4 and Figures 6 to 8, an opening portion 49 open in the vehicle width direction and extending in the front-rear direction of the vehicle is provided in an outer side portion in the vehicle width direction of the side sill 40, the upper outer panel 50 is disposed in an upper portion of the opening portion 49, and the bottom surface portion 46 of the upper inner panel 45 is disposed in a lower portion of the opening portion 49. The door rail 55 is attached to the lower surface of the upper outer panel 50 located on the outside in the vehicle width direction of the inner wall portion 47, and the reinforcement 60 is disposed along the longitudinal direction of the opening portion 49 on the inside in the vehicle width direction of the opening portion 49.

Since the side sill 40 of the present embodiment is provided with the opening portion 49 as described above, its rigidity is reduced. By disposing the door rail 55 along the longitudinal direction of the opening portion 49, the rigidity around the opening portion 49 can be ensured. Moreover, since the reinforcement 60 is disposed along the door rail 55 and the longitudinal direction (front-rear direction of vehicle) of the opening portion 49, impact load can be absorbed effectively by the reinforcement 60 in the easily deformable parts of the side sill 40.

Additionally, in the present embodiment, as illustrated in Figure 5, a part of the door rail 55 and a part of the reinforcement 60 overlap in plan view. In this example, a front portion of the flat surface portion 61 and the protrusion 63 of the reinforcement 60 are disposed below the door rail 55.

The door rail 55 is a member that allows the slide door to slide, and has high rigidity. Since the door rail 55 is joined to the lower surface of the upper outer panel 50 forming a part of the side sill 40, the surface rigidity of the upper outer panel 50 is improved.

A front portion of the door rail 55 curves inward in the vehicle width direction toward the vehicle front. In addition, a front portion of the flat surface portion 61 of the reinforcement 60 is provided with the protrusion 63. Hence, the vehicle widthwise length is longer in the front portion than in the rear portion in the flat surface portion 61. Since the front portion of the door rail 55 curves inward as described above, the region in which the door rail 55 is disposed is wider in the front portion than in the rear portion. In the present embodiment, the front portion of the flat surface portion 61 in which the protrusion 63 is provided overlaps the door rail 55 in plan view.

Impact load by a side collision is transmitted inward in the vehicle width direction via the door rail 55. At this time, in the region in which the reinforcement 60 and the door rail 55 overlap in plan view, the load is easily transmitted to the reinforcement 60. As a result, load absorption by the reinforcement 60 is facilitated. Note that a bead extending in the vehicle width direction is provided in the flat surface portion 61 of the reinforcement 60 of the present embodiment. With this configuration, an intended rigidity is set for the reinforcement 60.

Moreover, in the present embodiment, the vehicle widthwise inner side portion of the reinforcement 60 is joined to the battery mounting member 30, and the vehicle widthwise inner side portion of the first cross member 71 is joined to the vehicle widthwise inner side portion of the battery mounting member 30. Specifically, the vertical wall portion 62 of the reinforcement 60 is joined to the outer wall portion 32 of the battery mounting member 30, and the flange portion 31a of the inner wall portion 31 of the battery mounting member 30 is joined to the first extension member 73 of the first cross member 71.

As a result, the side member 20 and the battery mounting member 30 are supported by the first cross member 71, and the load input to the side member 20 and the battery mounting member 30 from the reinforcement 60 can be transmitted to the first cross member 71. Therefore, load is distributed effectively, and load input to the battery pack 10 is reduced.

In the present embodiment, as described above, the vehicle widthwise inner side portion of the first cross member 71 is joined to the side member 20 and the battery mounting member 30. Therefore, deformation of the side member 20 and the battery mounting member 30 toward the vehicle inner side can be reduced. As a result, load acting on the battery pack 10 is reduced.

In the present embodiment, a side bracket 81 is disposed behind the reinforcement 60 while being spaced apart from the reinforcement 60. The side bracket 81 is a plate-shaped member joined to the inner wall portion 47 of the upper inner panel 45, the inner wall portion 44 of the lower inner panel 41, and an outer wall portion 84 of the hanger member 82.

The side bracket 81 has a lower rigidity than the vehicle body frame and the hanger member 82, and therefore can deform so as to absorb impact load by a side collision. Note that since the side bracket 81 is joined to the hanger member 82, high rigidity in the up-down direction of the vehicle can be set. Therefore, the side bracket 81 can be used as a jack-up contact point.

The description of the present embodiment is an example for illustrating the present invention and does not limit the invention as claimed in the claims. Furthermore, the configuration of each part of the present invention is not limited to the embodiment, and various modifications can be made within the technical scope claimed in the claims.

For example, in the present embodiment, the reinforcement 60 includes the plate-shaped flat surface portion 61 extending continuously in the vehicle direction, but the invention is not limited to this. For example, a plurality of plates shorter in the front-rear direction of the vehicle than the flat surface portion 61 of the present embodiment may be disposed while being spaced apart from each other in the front-rear direction of the vehicle.

In the present embodiment, the upper outer panel 50 forming the side sill 40 functions as a footrest for occupants getting in and out of the vehicle through the door opening 27. Therefore, for example, the structure of the side sill 40 of the present embodiment is effective for a vehicle with a high floor portion. For example, in a vehicle with a cab-over structure, in which the front seats (driver's and passenger's seats) are located on the upper side of the electric motor, the side sill 40 structure of the present embodiment is effective as a countermeasure against side collisions. Even in a vehicle in which the electric motor is disposed below the front seat, for example, if there is a space R (Figure 1) on the upper side of a front portion of the battery pack 10 on the lower side of the front seat, and any device is placed there, the structure of the side sill 40 of the present embodiment is effective as a countermeasure against side collisions.

### [Reference Signs List]

- 10: Battery pack
- 11: Upper surface portion
- 12: Side wall portion
- 13: Lower surface portion
- 14: Front wall portion
- 15: Rear wall portion
- 16: Side panel
- 17: Floor panel
- 18: Upper floor panel
- 20: Side member
- 20a: Reinforcement plate
- 20b: Reinforcement plate
- 21: Inner wall portion
- 21a: Inner flange portion
- 22: Outer wall portion
- 22a: Outer flange portion
- 23: Bottom surface portion
- 25: Upper reinforcement plate
- 25a: Flat surface portion
- 25b: Flange portion
- 26: Lower reinforcement plate
- 26a: Flat surface portion
- 26b: Flange portion
- 27: Door opening
- 28: Side body outer panel
- 30: Battery mounting member
- 31: Inner wall portion
- 31a: Flange
- 32: Outer wall portion
- 33: Bottom surface portion
- 34: Closing portion
- 35: Battery suspension bracket
- 40: Side sill
- 41: Lower inner panel
- 42: Outer wall portion
- 43: Inclined surface portion
- 44: Inner wall portion
- 45: Upper inner panel
- 46: Bottom surface portion (lower plate portion)
- 47: Inner wall portion (inner wall portion)
- 47a: Upper flange portion
- 48: Outer wall portion
- 48a: Stepped portion
- 49: Opening portion
- 50: Upper outer panel (upper plate portion)
- 51: Upper flange portion
- 52: Rear flange portion
- 55: Door rail
- 60: Reinforcement
- 61: Flat surface portion
- 62: Vertical wall portion
- 63: Protrusion
- 71: First cross member
- 72: First central member
- 72f: Front flange portion
- 72r: Rear flange portion
- 73: First extension member
- 73a: Lower surface portion
- 73b: Vertical flange portion
- 73f: Front flange portion
- 73r: Rear flange portion
- 75: Second cross member
- 76: Second central member
- 77: Second extension member
- 81: Side bracket
- 82: Hanger member
- 84: Outer wall portion
- S: Gap
- R: Space

## Claims

1. A side structure for an electric vehicle, comprising:
a battery pack disposed on a lower side of a floor portion of a vehicle;
a vehicle body frame disposed on an outside in a vehicle width direction of the battery pack and extending in a front-rear direction of the vehicle on the lower side of the floor portion; and
a side sill that is disposed on the outside in the vehicle width direction of the vehicle body frame while being spaced apart from the vehicle body frame and extends in the front-rear direction of the vehicle, **characterized in that**:
the side structure comprises a reinforcement connecting a lower portion of the side sill and the vehicle body frame; and
a vehicle widthwise rigidity of the reinforcement is set to be lower than a vehicle widthwise rigidity of the vehicle body frame.

2. The side structure for an electric vehicle according to claim 1, wherein:
the vehicle body frame includes a side member extending in the front-rear direction of the vehicle and a battery mounting member joined to a lower portion of the side member and extending in the front-rear direction of the vehicle;
a gap is formed between the battery mounting member and the side sill in the vehicle width direction; and
the reinforcement is disposed so as to cover the gap from the lower side.

3. The side structure for an electric vehicle according to claim 1, wherein:
the side sill includes an upper plate portion extending in the front-rear direction of the vehicle, a lower plate portion disposed on the lower side of the upper plate portion while being spaced apart from the upper plate portion, and an inner wall portion extending toward the upper side of the vehicle from a vehicle widthwise inner end of the lower plate portion and joined to a lower surface of the upper plate portion;
an opening portion open in the vehicle width direction and extending in the front-rear direction of the vehicle is provided in an outer side portion in the vehicle width direction of the side sill, the upper plate portion is disposed in an upper portion of the opening portion, and the lower plate portion is disposed in a lower portion of the opening portion;
a door rail for opening and closing a slide door is attached to the lower surface of the upper plate portion located on the outside in the vehicle width direction of the inner wall portion; and
the reinforcement is disposed on the inside in the vehicle width direction of the opening portion and along a longitudinal direction of the opening portion.

4. The side structure for an electric vehicle according to claim 3, wherein a part of the door rail and a part of the reinforcement overlap in plan view.

5. The side structure for an electric vehicle according to claim 2, wherein
a vehicle widthwise inner side portion of the reinforcement is joined to the battery mounting member, and
a vehicle widthwise inner side portion of a cross member extending in the vehicle width direction is joined to a vehicle widthwise inner side portion of the battery mounting member.

6. The side structure for an electric vehicle according to claim 5, wherein a vehicle widthwise inner side portion of the cross member is joined to the side member and the battery mounting member.
